# EUROPÄISCHE PATENTANMELDUNG

(11) **EP 3 373 559 A1**
(43) Veröffentlichungstag der Anmeldung: **12.09.2018**
(21) Anmeldenummer: 17159804.8
(22) Anmeldetag: 08.03.2017
(51) Int. Cl.: H04L 29/12, H04L 12/40

(54) **VERFAHREN ZUM AUFBAU EINER KOMMUNIKATIONSVERBINDUNG ZWISCHEN EINEM AUTOMATISIERUNGSGERÄT EINES INDUSTRIELLEN AUTOMATISIERUNGSSYSTEMS UND EINEM BEDIENGERÄT UND AUTOMATISIERUNGSGERÄT**

(71) Anmelder: Siemens Aktiengesellschaft, 80333 München (DE)
(72) Erfinder: Müller, Peter-Michael, 75045 Walzbachtal-Wössingen (DE)

(57) **Zusammenfassung**

Die Erfindung betrifft ein Verfahren zum Aufbau einer Kommunikationsverbindung zwischen einem Automatisierungsgerät eines industriellen Automatisierungssystems und einem Bediengerät, bei dem das Automatisierungsgerät (1) über eine Ethernet-Schnittstelle (10) an das Bediengerät (2) angeschlossen und in einen Konfigurationsbetriebszustand versetzt wird. Im Konfigurationsbetriebszustand wird eine DHCP-Servereinheit (111) des Automatisierungsgeräts (1) aktiviert. Bei Aktivierung weist die DHCP-Servereinheit (111) eine Kommunikationsnetzadresse an das Bediengerät (2) zu. Unter Verwendung der durch die DHCP-Servereinheit (111) an das Bediengerät (2) zugewiesenen Kommunikationsnetzadresse und einer für den Konfigurationsbetriebszustand vorgegebenen Kommunikationsnetzadresse des Automatisierungsgeräts (1) wird die Kommunikationsverbindung aufgebaut.

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aus EP 1 125 422 B1 ist ein Verfahren zum Initialisieren einer IP-Adresse eines Modems in einem lokalen Netz bekannt, bei dem durch eine Konfigurationsstation innerhalb des lokalen Netzes zunächst eine Anforderung gesendet wird. Anschließend empfängt die Konfigurationsstation eine Antwort des Modems auf die Anforderung. Diese Antwort umfasst eine dem Modem zugeordnete Kennung, die zumindest eine IP-Adresse für das Modem umfasst. Die Kennung wird darauf überprüft, ob sie kompatibel zu Einstellungen für das lokale Netz ist. Falls die Kennung zu den Einstellungen kompatibel ist, wird eine die Kennung umfassende Bestätigungsnachricht an das Modem übermittelt, das auf diese Bestätigungsnachricht eine Bestätigungsantwort sendet. Ist die Kennung dagegen zu den Einstellungen nicht kompatibel, wird eine Adressänderungsnachricht gesendet, die eine neue IP-Adresse für das Modem umfasst. Auf diese Adressänderungsnachricht sendet das Modem eine Änderungsbestätigung. Als Antwort auf die Adressänderungsnachricht wird eine die neue IP-Adresse umfassende Adressbestätigungsnachricht an das Modem übermittelt, das darauf eine entsprechende Bestätigung zurücksendet.

In EP 2 924 957 A1 ist ein Verfahren zur Konfiguration eines Kommunikationsgeräts innerhalb eines industriellen Automatisierungssystems beschrieben, bei dem eine erste Überprüfung durchgeführt wird, ob dem Kommunikationsgerät bereits eine manuell konfigurierte oder mittels DHCPv6 zugewiesene IPv6-Adresse zugeordnet ist. Bei einer positiven ersten Überprüfung wird eine zweite Überprüfung durchgeführt, ob ein für das Kommunikationsgerät konfigurierter IPv6-Default-Gateway erreichbar und ein dem Kommunikationsgerät zugeordnetes IPv6-Präfix an das Kommunikationsgerät übermittelt ist. Bei einer negativen zweiten Überprüfung wird ein Testbetrieb des Kommunikationsgeräts eingeleitet. Das Kommunikationsgerät erzeugt im Testbetrieb selbstständig ein IPv6-Präfix, dem ein als onlink bezeichneter Status zugeordnet wird. Das Kommunikationsgerät entfernt bei einem Verlassen des Testbetriebs das selbstständig erzeugte IPv6-Präfix.

Zur Konfiguration von Kommunikationsgeräten eines industriellen Kommunikationsnetzes werden entsprechend EP 2 975 827 A1 erste Konfigurationsinformationen für die Kommunikationsgeräte mittels Routerbekanntgabe-Nachrichten durch zumindest einen Router innerhalb eines Teilnetzes an vom jeweiligen Teilnetz umfasste Kommunikationsgeräte übermittelt. Die ersten Konfigurationsinformationen umfassen Steuerungsinformationen mit Angaben über zweite Konfigurationsinformationen, die durch zumindest einen Konfigurationsserver bereitgestellt werden. Mittels Kommunikationsgeräte- oder Router-seitiger Diagnoseeinheiten wird überprüft, ob die ersten Konfigurationsinformationen innerhalb des jeweiligen Teilnetzes zueinander konsistente Steuerungsinformationen umfassen. Bei einem Vorliegen inkonsistenter Steuerungsinformationen werden die Kommunikationsgeräte entsprechend ersten Konfigurationsinformationen konfiguriert, die durch zumindest einen vor Vorliegen der inkonsistenten Steuerungsinformationen für eine Konfiguration maßgeblichen Router übermittelt werden.

Industrielle Automatisierungsgeräte weisen häufig eine Ethernet-Schnittstelle auf, die üblicherweise zur Feldbus-Kommunikation verwendet wird und damit für Wartungs- oder Inbetriebnahmearbeiten nicht frei verfügbar ist. Derartige Geräte sind ohne vorherige Konfiguration nicht von einem anderen Kommunikationsgerät per TCP/IP erreichbar. Dies betrifft insbesondere mittels eines Webservers durch ein Automatisierungsgerät bereitgestellte Funktionen.

Der vorliegenden Erfindung liegt daher die Aufgabe zugrunde, ein Verfahren zum Aufbau einer Kommunikationsverbindung zwischen einem Automatisierungsgerät eines industriellen Automatisierungssystems und einem Bediengerät anzugeben, das keine aufwendige vorhergehende Gerätekonfiguration erfordert und insbesondere für Wartungs- oder Inbetriebnahmearbeiten einfach nutzbar ist, und ein zur Durchführung des Verfahrens geeignetes Automatisierungsgerät zu schaffen.

Diese Aufgabe wird erfindungsgemäß durch ein Verfahren mit den in Anspruch 1 angegebenen Merkmalen und durch ein Automatisierungsgerät mit den in Anspruch 12 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zum Aufbau einer Kommunikationsverbindung zwischen einem Automatisierungsgerät eines industriellen Automatisierungssystems und einem Bediengerät wird das Automatisierungsgerät über eine Ethernet-Schnittstelle an das Bediengerät angeschlossen und in einen Konfigurationsbetriebszustand versetzt. Das Automatisierungsgerät kann beispielsweise eine optische Objekterfassungsvorrichtung sein. Das Bediengerät umfasst vorzugsweise eine graphische Benutzerschnittstelle. Im Konfigurationsbetriebszustand wird eine DHCP-Servereinheit (Dynamic Host Configuration Protocol) des Automatisierungsgeräts aktiviert. Bei Aktivierung weist die DHCP-Servereinheit eine Kommunikationsnetzadresse an das Bediengerät zu. Unter Verwendung der durch die DHCP-Servereinheit an das Bediengerät zugewiesenen Kommunikationsnetzadresse und einer für den Konfigurationsbetriebszustand vorgegebenen Kommunikationsnetzadresse des Automatisierungsgeräts wird die Kommunikationsverbindung zwischen dem Automatisierungsgerät und dem Bediengerät aufgebaut. Der Aufbau der Kommunikationsverbindung wird vorzugsweise durch das Bediengerät initiiert.

Das erfindungsgemäße Verfahren ermöglicht einen schnellen und einfachen Anwenderzugriff auf ein Automatisierungsgerät, das beispielsweise als PNIO-Gerät ausgestaltet sein kann, mittels eines Bediengeräts, das vorzugsweise einen DHCP-Client umfasst. Insbesondere erfordert eine Anwendung des erfindungsgemäßen Verfahrens anwenderseitig keine vertieften technischen Kenntnisse, keine gesonderte Zugriffsrechteverwaltung und keine Installation zusätzlicher Software. Darüber hinaus können bei bestimmungsgemäßer Anwendung des erfindungsgemäßen Verfahrens Kommunikationsnetz-Konflikte ausgeschlossen werden.

Entsprechend einer vorteilhaften Weiterbildung der vorliegenden Erfindung greift das Bediengerät über die aufgebaute Kommunikationsverbindung zur Konfiguration des Automatisierungsgeräts im Konfigurationsbetriebszustand des Automatisierungsgeräts auf eine Web-Servereinheit des Automatisierungsgeräts zu. Darüber hinaus kann mittels des Bediengeräts im Konfigurationsbetriebszustand des Automatisierungsgeräts über die Web-Servereinheit zumindest ein Gerätename an das Automatisierungsgerät zugewiesen werden. Zum Zugriff auf die Web-Servereinheit durch das Bediengerät wird vorzugsweise eine Benutzereingabe eines der Web-Servereinheit zugeordneten Ressourcen-Identifikators oder Domänen-Namens angefordert. Dabei wird der Ressourcen-Identifikator oder Domänen-Name durch eine DNS-Servereinheit des Automatisierungsgeräts in die für den Konfigurationsbetriebszustand vorgegebene Kommunikationsnetzadresse des Automatisierungsgeräts aufgelöst.

Die vorgegebene Kommunikationsnetzadresse des Automatisierungsgeräts ist dem Automatisierungsgerät entsprechend einer besonders bevorzugten Ausgestaltung des erfindungsgemäßen Verfahrens nur im Konfigurationsbetriebszustand zugeordnet. Insbesondere wird mittels einer DHCP-Clienteinheit des Automatisierungsgeräts für vom Konfigurationsbetriebszustand verschiedene Betriebszustände des Automatisierungsgeräts eine Adresskonfiguration für das Automatisierungsgerät von einem DHCP-Server des industriellen Automatisierungssystems angefordert.

Vorzugsweise wird das Automatisierungsgerät mittels eines äußeren Bedienelements am Automatisierungsgerät in den Konfigurationsbetriebszustand versetzt. Beispielsweise durch erneute Betätigung des Bedienelements kann der Konfigurationsbetriebszustand des Automatisierungsgeräts beendet werden.

Das erfindungsgemäße Automatisierungsgerät ist zur Durchführung eines Verfahrens entsprechend vorangehenden Ausführungen vorgesehen und umfasst eine Ethernet-Schnittstelle zum Anschluss an ein Bediengerät. Außerdem ist eine in einem Konfigurationsbetriebszustand des Automatisierungsgeräts aktivierte DHCP-Servereinheit vorgesehen, wobei das Automatisierungsgerät in den Konfigurationsbetriebszustand versetzbar ist. Darüber hinaus ist die DHCP-Servereinheit dafür ausgestaltet und eingerichtet, bei Aktivierung eine Kommunikationsnetzadresse an das Bediengerät zuzuweisen. Außerdem ist das Automatisierungsgerät dafür ausgestaltet und eingerichtet, eine Kommunikationsverbindung mit dem Bediengerät unter Verwendung der durch die DHCP-Servereinheit an das Bediengerät zugewiesenen Kommunikationsnetzadresse und einer für den Konfigurationsbetriebszustand vorgegebenen Kommunikationsnetzadresse des Automatisierungsgeräts aufzubauen.

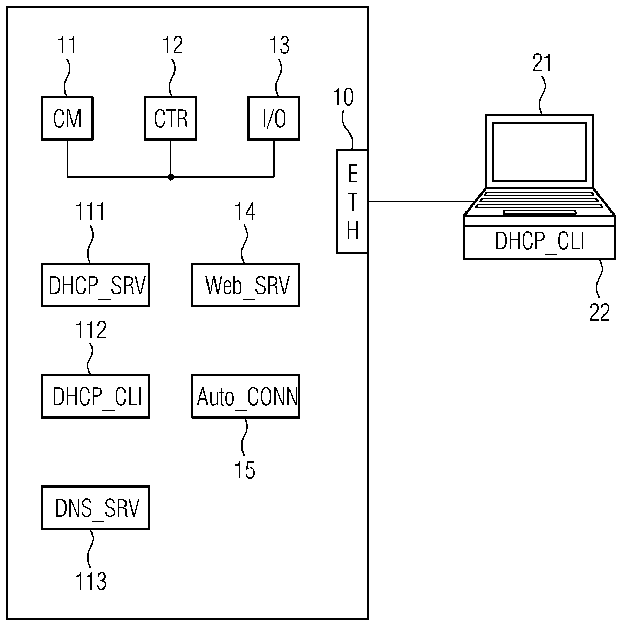

Die vorliegende Erfindung wird nachfolgend an einem Ausführungsbeispiel anhand der Zeichnung näher erläutert. Es zeigt die
- Figur: eine Anordnung mit einem Automatisierungsgeräts eines industriellen Automatisierungsgeräts und einem Bediengerät.

Die in der Figur dargestellte Anordnung umfasst ein zu konfigurierendes Automatisierungsgerät 1 eines industriellen Automatisierungssystems und ein mit diesem verbundenes Bediengerät 2 mit einer graphischen Benutzerschnittstelle 21, das beispielsweise als Laptop oder Tablet-PC ausgestaltet sein kann. Das Automatisierungsgerät 1 kann beispielsweise als speicherprogrammierbare Steuerung oder Ein-/Ausgabeeinheit des industriellen Automatisierungssystems oder als optische Objekterfassungsvorrichtung ausgestaltet sein. Speicherprogrammierbare Steuerungen umfassen typischerweise jeweils ein Kommunikationsmodul 11, eine Zentraleinheit 12 sowie zumindest eine Eingabe/Ausgabe-Einheit 13 (1/0-Modul). Eingabe/Ausgabe-Einheiten können grundsätzlich auch als dezentrale Peripheriemodule ausgestaltet sein, die entfernt von einer speicherprogrammierbaren Steuerung angeordnet sind. Ist das Automatisierungsgerät 1 als optische Objekterfassungseinrichtung ausgestaltet, so umfasst es zumindest eine Bilderfassungseinheit 16.

Über das mit zumindest einer Ethernet-Schnittstelle 10 verbundene Kommunikationsmodul 11 ist das Automatisierungsgerät 1 in einem Normal-Betriebszustand beispielsweise an einen Switch oder Router oder an einen Feldbus anschließbar. Alternativ zum Normal-Betriebszustand ist das Automatisierungsgerät 1 in einen Konfigurationsbetriebszustand versetzbar. Die Eingabe/Ausgabe-Einheit 13 dient einem Austausch von Steuerungs- und Messgrößen zwischen dem Automatisierungsgerät 1 und einer durch das Automatisierungsgerät 1 gesteuerten Maschine oder Vorrichtung, insbesondere der Bilderfassungseinheit 16. Die Zentraleinheit 12 ist insbesondere für eine Ermittlung geeigneter Steuerungsgrößen aus erfassten Messgrößen vorgesehen. Obige Komponenten des Automatisierungsgeräts 1 können beispielsweise über ein Rückwandbus-System miteinander verbunden sein.

Im Konfigurationsbetriebszustand des Automatisierungsgeräts 1 ist die Ethernet-Schnittstelle 10 zum Anschluss an das Bediengerät 2 vorgesehen. Das Automatisierungsgerät 1 umfasst außerdem eine DHCP-Servereinheit 111, die im Konfigurationsbetriebszustand des Automatisierungsgeräts 1 aktiviert ist und beispielsweise dem Kommunikationsmodul 11 zugeordnet sein kann. Die DHCP-Servereinheit 111 ist dafür ausgestaltet und eingerichtet, bei Aktivierung und Verbindung mit dem Bediengerät 2 eine IPv4- oder IPv6-Adresse an das Bediengerät 2 zuzuweisen, das im vorliegenden Ausführungsbeispiel einen DHCP-Client 22 umfasst. Unter Verwendung der durch die DHCP-Servereinheit 111 an das Bediengerät 2 zugewiesenen IPv4- oder IPv6-Adresse und einer für den Konfigurationsbetriebszustand vorgegebenen Kommunikationsnetzadresse des Automatisierungsgeräts 1 wird eine TCP/IP-Verbindung zu einer Web-Servereinheit 14 des Automatisierungsgeräts 1 aufgebaut.

Über die aufgebaute TCP/IP-Verbindung greift das Bediengerät 2 zur Konfiguration des Automatisierungsgeräts 1 im Konfigurationsbetriebszustand des Automatisierungsgeräts 1 auf die Web-Servereinheit 14 zu. Im vorliegenden Ausführungsbeispiel wird der Aufbau der TCP/IP-Verbindung durch das Bediengerät 2 initiiert und mittels des Bediengeräts 2 im Konfigurationsbetriebszustand des Automatisierungsgeräts 1 über die Web-Servereinheit 14 zumindest ein Gerätename an das Automatisierungsgerät 1 zugewiesen. Zum Zugriff auf die Web-Servereinheit 14 wird durch das Bediengerät 2 beispielsweise eine Benutzereingabe eines der Web-Servereinheit 14 zugeordneten Uniform Ressource Locators (URL) oder eines Domänen-Namens angefordert. Der Uniform Ressource Locator bzw. der Domänen-Name wird durch eine DNS-Servereinheit 113 des Automatisierungsgeräts 1 in die für den Konfigurationsbetriebszustand vorgegebene Kommunikationsnetzadresse des Automatisierungsgeräts 1 aufgelöst.

Diese vorgegebene Kommunikationsnetzadresse ist dem Automatisierungsgerät 1 nur im Konfigurationsbetriebszustand zugeordnet. Mittels einer DHCP-Clienteinheit 112 des Automatisierungsgeräts 1 wird für vom Konfigurationsbetriebszustand verschiedene Betriebszustände des Automatisierungsgeräts 1, insbesondere für den Normal-Betriebszustand, eine Adresskonfiguration für das Automatisierungsgerät 1 von einem DHCP-Server des industriellen Automatisierungssystems angefordert.

Entsprechend einer besonders bevorzugten Ausführungsform wird das Automatisierungsgerät 1 mittels eines äußeren Bedienelements 15 am Automatisierungsgerät 1, insbesondere mittels eines Schalters, in den Konfigurationsbetriebszustand versetzt. Durch erneute Betätigung des Bedienelements 15 kann der Konfigurationsbetriebszustand des Automatisierungsgeräts 1 beispielsweise wieder beendet werden.

## Patentansprüche

1. Verfahren zum Aufbau einer Kommunikationsverbindung zwischen einem Automatisierungsgerät eines industriellen Automatisierungssystems und einem Bediengerät, bei dem
- das Automatisierungsgerät (1) über eine Ethernet-Schnittstelle (10) an das Bediengerät (2) angeschlossen wird,
- das Automatisierungsgerät (1) in einen Konfigurationsbetriebszustand versetzt wird,
- im Konfigurationsbetriebszustand eine DHCP-Servereinheit (111) des Automatisierungsgeräts (1) aktiviert wird,
- die DHCP-Servereinheit (111) bei Aktivierung eine Kommunikationsnetzadresse an das Bediengerät (2) zuweist,
- die Kommunikationsverbindung unter Verwendung der durch die DHCP-Servereinheit (111) an das Bediengerät (2) zugewiesenen Kommunikationsnetzadresse und einer für den Konfigurationsbetriebszustand vorgegebenen Kommunikationsnetzadresse des Automatisierungsgeräts (1) aufgebaut wird.

2. Verfahren nach Anspruch 1,
bei dem das Bediengerät (2) über die aufgebaute Kommunikationsverbindung zur Konfiguration des Automatisierungsgeräts (1) im Konfigurationsbetriebszustand des Automatisierungsgeräts auf eine Web-Servereinheit (14) des Automatisierungsgeräts zugreift.

3. Verfahren nach Anspruch 2,
bei dem mittels des Bediengeräts (2) im Konfigurationsbetriebszustand des Automatisierungsgeräts (1) über die Web-Servereinheit (14) zumindest ein Gerätename an das Automatisierungsgerät zugewiesen wird.

4. Verfahren nach einem der Ansprüche 2 oder 3,
bei dem zum Zugriff auf die Web-Servereinheit (14) durch das Bediengerät (2) eine Benutzereingabe eines der Web-Servereinheit zugeordneten Ressourcen-Identifikators oder Domänen-Namens angefordert wird und bei dem der Ressourcen-Identifikator oder Domänen-Name durch eine DNS-Servereinheit (113) des Automatisierungsgeräts (1) in die für den Konfigurationsbetriebszustand vorgegebene Kommunikationsnetzadresse des Automatisierungsgeräts aufgelöst wird.

5. Verfahren nach einem der Ansprüche 1 bis 4,
bei dem der Aufbau der Kommunikationsverbindung durch das Bediengerät (2) initiiert wird.

6. Verfahren nach einem der Ansprüche 1 bis 5,
bei dem die vorgegebene Kommunikationsnetzadresse des Automatisierungsgeräts (1) nur im Konfigurationsbetriebszustand zugeordnet ist.

7. Verfahren nach Anspruch 6,
bei dem mittels einer DHCP-Clienteinheit (112) des Automatisierungsgeräts (1) für vom Konfigurationsbetriebszustand verschiedene Betriebszustände des Automatisierungsgeräts eine Adresskonfiguration für das Automatisierungsgerät von einem DHCP-Server des industriellen Automatisierungssystems angefordert wird.

8. Verfahren nach einem der Ansprüche 1 bis 7,
bei dem das Automatisierungsgerät (1) mittels eines äußeren Bedienelements (15) am Automatisierungsgerät in den Konfigurationsbetriebszustand versetzt wird.

9. Verfahren nach Anspruch 8,
bei dem der Konfigurationsbetriebszustand des Automatisierungsgeräts (1) durch erneute Betätigung des Bedienelements (15) beendet wird.

10. Verfahren nach einem der Ansprüche 1 bis 9,
bei dem das Automatisierungsgerät (1) eine optische Objekterfassungsvorrichtung ist.

11. Verfahren nach einem der Ansprüche 1 bis 10,
bei dem das Bediengerät (2) eine graphische Benutzerschnittstelle (21) umfasst.

12. Automatisierungsgerät zur Durchführung eines Verfahrens nach einem der Ansprüche 1 bis 11 mit
- einer Ethernet-Schnittstelle (10) zum Anschluss an ein Bediengerät (2),
- einer in einem Konfigurationsbetriebszustand des Automatisierungsgeräts (1) aktivierten DHCP-Servereinheit (111), wobei das Automatisierungsgerät in den Konfigurationsbetriebszustand versetzbar ist,
- wobei die DHCP-Servereinheit (111) dafür ausgestaltet und eingerichtet ist, bei Aktivierung eine Kommunikationsnetzadresse an das Bediengerät (2) zuzuweisen,
- wobei das Automatisierungsgerät (1) dafür ausgestaltet und eingerichtet ist, eine Kommunikationsverbindung mit dem Bediengerät (2) unter Verwendung der durch die DHCP-Servereinheit (111) an das Bediengerät zugewiesenen Kommunikationsnetzadresse und einer für den Konfigurationsbetriebszustand vorgegebenen Kommunikationsnetzadresse des Automatisierungsgeräts aufzubauen.
